(19) **Europäisches Patentamt**
**European Patent Office**
**Office européen des brevets**

(11) **EP 1 878 166 B1**

(12) **EUROPÄISCHE PATENTSCHRIFT**

(45) Veröffentlichungstag und Bekanntmachung des Hinweises auf die Patenterteilung:
**19.09.2012 Patentblatt 2012/38**

(21) Anmeldenummer: **06725745.1**

(22) Anmeldetag: **13.04.2006**

(51) Int Cl.:
***H04L 12/40*** *(2006.01)*

(86) Internationale Anmeldenummer:
**PCT/EP2006/061576**

(87) Internationale Veröffentlichungsnummer:
**WO 2006/114370 (02.11.2006 Gazette 2006/44)**

(54) **VERFAHREN UND VORRICHTUNG ZUM DEKODIEREN EINES SIGNALS**

METHOD AND DEVICE FOR DECODING A SIGNAL

PROCEDE ET DISPOSITIF DE DECODAGE D'UN SIGNAL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.04.2005 DE 102005019913**
**20.12.2005 DE 102005060903**

(43) Veröffentlichungstag der Anmeldung:
**16.01.2008 Patentblatt 2008/03**

(73) Patentinhaber: **Robert Bosch GmbH**
**70442 Stuttgart (DE)**

(72) Erfinder:
• **HARTWICH, Florian**
**72762 Reutlingen (DE)**
• **ROHATSCHEK, Andreas-Juergen**
**73249 Wernau/Neckar (DE)**
• **BOEHL, Eberhard**
**72768 Reutlingen (DE)**

(56) Entgegenhaltungen:
**WO-A-96/26607     DE-A1- 10 120 360**
**DE-C2- 3 546 684**

**Beschreibung**

Die vorliegende Erfindung betrifft ein Verfahren zur Dekodierung eines Signals, das über mindestens eine Verbindungsleitung eines Datenübertragungssystems übertragen wird, in einem das Signal empfangenden Teilnehmer des Datenübertragungssystems nach dem Oberbegriff des Anspruchs 1. Die Erfindung betrifft außerdem ein System zur Übertragung eines Signals nach dem Oberbegriff des Anspruchs 10. Des weiteren betrifft die vorliegende Erfindung einen Teilnehmer eines Datenübertragungssystems nach dem Oberbegriff des Anspruchs 12. Die Erfindung betrifft schließlich auch einen Kommunikations-Controller eines Teilnehmers eines Datenübertragungssystems nach dem Oberbegriff des Anspruchs 14.

Stand der Technik

Die Vernetzung von Steuergeräten, Sensorik und Aktuatorik mit Hilfe eines Kommunikationssystems oder Datenübertragungssystems und einer Kommunikationsverbindung, bspw. in Form eines Bussystems, hat in den letzten Jahren in modernen Kraftfahrzeugen aber auch in anderen Bereichen, bspw. im Maschinenbau, insbesondere im Werkzeugmaschinenbereich, und in der Automatisierung drastisch zugenommen. Synergieeffekte durch Verteilung von Funktionen auf mehrere Teilnehmer, bspw. Steuergeräte, des Kommunikationssystems können dabei erzielt werden. Man spricht hierbei von verteilten Systemen.

Die Kommunikation zwischen verschiedenen Teilnehmern eines solchen Datenübertragungssystems findet mehr und mehr über ein Bussystem statt. Der Kommunikationsverkehr auf dem Bussystem, Zugriffs- und Empfangsmechanismen, sowie Fehlerbehandlung werden über ein Protokoll geregelt. Ein bekanntes Protokoll ist beispielsweise das FlexRay-Protokoll, wobei derzeit die FlexRay-Protokollspezifikation v2.1 zu Grunde liegt. Bei FlexRay handelt es sich um ein schnelles, deterministisches und fehlertolerantes Bussystem, insbesondere für den Einsatz in Kraftfahrzeugen. Das FlexRay-Protokoll arbeitet nach dem Prinzip des Time Division Multiple Access (TDMA), wobei den Teilnehmern bzw. den zu übertragenden Botschaften feste Zeitschlitze zugewiesen werden, in denen sie einen exklusiven Zugriff auf die Kommunikationsverbindung haben. Die Zeitschlitze wiederholen sich dabei in einem festgelegten Zyklus, so dass der Zeitpunkt, zu dem eine Botschaft über den Bus übertragen wird, exakt vorausgesagt werden kann und der Buszugriff deterministisch erfolgt.

Um die Bandbreite für die Übertragung von Botschaften auf dem Bussystem optimal zu nutzen, unterteilt FlexRay den Zyklus in einen statischen und einen dynamischen Teil bzw. in ein statisches und ein dynamisches Segment. Die festen Zeitschlitze befinden sich dabei im statischen Teil am Anfang eines Buszyklusses. Im dynamischen Teil werden die Zeitschlitze dynamisch vorgegeben. Darin wird nun der exklusive Buszugriff jeweils nur für eine kurze Zeit, für die Dauer mindestens eines sogenannten Minislots, ermöglicht. Nur wenn innerhalb eines Minislots ein Buszugriff erfolgt, wird der Zeitschlitz um die für den Zugriff benötigte Zeit verlängert. Damit wird Bandbreite also nur verbraucht, wenn sie auch tatsächlich benötigt wird. Dabei kommuniziert FlexRay über eine oder zwei physikalisch getrennte Leitungen mit einer Datenrate von jeweils maximal 10 Mbit/sec. Selbstverständlich kann FlexRay aber auch mit niedrigeren Datenraten betrieben werden. Die beiden Kanäle entsprechen dabei der physikalischen Schicht, insbesondere des sogenannten OSI (Open System Architecture) Schichtenmodells. Diese dienen hauptsächlich der redundanten und damit fehlertoleranten Übertragung von Botschaften, können jedoch auch unterschiedliche Botschaften übertragen, wodurch sich dann die Datenrate verdoppeln könnte. Es ist auch denkbar, dass sich das über die Verbindungsleitungen übertragene Signal aus der Differenz von über die beiden Leitungen übertragenen Signalen ergibt. Die physikalische Schicht ist derart ausgestaltet, dass sie eine elektrische aber auch optische Übertragung des oder der Signale über die Leitung(en) oder eine Übertragung auf anderem Wege ermöglicht.

Um synchrone Funktionen zu realisieren und die Bandbreite durch kleine Abstände zwischen zwei Botschaften zu optimieren, benötigen die Teilnehmer in dem Kommunikationsnetzwerk eine gemeinsame Zeitbasis, die sogenannte globale Zeit. Für die Synchronisation von lokalen Uhren der Teilnehmer werden Synchronisationsnachrichten im statischen Teil des Zyklus übertragen, wobei mit Hilfe eines speziellen Algorithmus entsprechend der FlexRay-Spezifikation die lokale Uhrzeit eines Teilnehmers so korrigiert wird, dass alle lokalen Uhren zu einer globalen Uhr synchron laufen.

Bei der Übertragung von Daten oder Botschaften über ein solches Bussystem werden Impulse verzerrt, weil High-to-Low bzw. Low-to-High-Flanken auf dem Übertragungsweg unterschiedlich stark verzögert werden. Wird der gesendete Impuls im Empfänger mit dem dort vorliegenden Abtasttakt (der sogenannter Sampling Rate) mehrfach (zum Beispiel n-mal pro Bit) abgetastet, so entscheidet die Lage des Abtastpunktes, d.h. die Auswahl genau eines dieser n Abtastwerte, ob das Datum richtig oder falsch abgetastet wird. Das ist insbesondere dann schwierig, wenn der Abtastzeitpunkt auf eine Flanke des Signals Bezug nimmt und relativ dazu auch über viele Perioden des Abtasttaktes mehrere binäre Datenwerte (Bits) des Senders auswertet. Hier wirkt sich zusätzlich zu einer Impulsverzerrung auch noch die Taktfrequenzabweichung zwischen Sender und Empfänger aus Die offenlegungsschrift DE-A1-10120360 bechribt eine solche fakt frequenzabweichung. Dabei kann das abzutastende Signal vorbehandelt sein, um zum Beispiel kurzzeitige Störungen auszufiltern. Ein solches Filter dann durch das Auswerten mehrerer Abtastsignale in der zeitlichen Reihenfolge mit einer Mehrheitsentscheidung (sog. Voting) sein. Insbesondere bei der Spezifikation des FlexRay-Protokolls, in dem es bei n Netzwerkknoten $2 \sum_{i=0}^{n-1} i$ unterschiedliche Übertragungswege geben kann (jeder denkbare Pfad hat 2 Sender-Empfänger-Kombintionen), hat es sich gezeigt, dass die starre Festlegung des Abtastzeitpunktes ohne Berücksichtigung der asymmetrischen Verzögerungen auf den unterschiedlichen Übertragungswegen zu Problemen beim Timing führt. Die Verzögerung zwischen steigender und fallender Flanke eines Signals wird auch als Impulsverzerrung oder asymmetrische Verzögerung bezeichnet.

Asymmetrische Verzögerungen können sowohl systematische als auch stochastische Ursachen haben. Beim FlexRay-Protokoll wirken sich systematische Verzögerungen nur auf die steigenden Flanken aus, da auf die fallenden Flanken synchronisiert wird. Stochastische Verzögerungen haben Auswirkungen sowohl auf die steigenden als auch auf die fallenden Flanken und sind durch Rauschvorgänge oder EMV-Jitter verursacht.

Durch die starre Wahl des Abtastzeitpunktes pro Bit (zum Beispiel bei n Abtastwerten pro Bit auf n/2, in der Mitte eines Bits) ist sowohl der Einfluss der asymmetrischen Verzerrung als auch die Frequenzabweichung und die zusätzliche Zeitdiskretisierung durch die Abtastung ein Problem und stellt hohe Anforderungen an den Übertragungskanal. Eine Erhöhung der Flankensteilheit zur Verringerung der asymmetrischen Verzögerungen brächte zwar Vorteile für das Timing, würde aber andererseits technisch anspruchsvollere und damit teurere Komponenten voraussetzen und zudem das EMV-Verhalten des Datenübertragungssystems ungünstig beeinflussen. Deshalb ist es manchmal günstiger, die Flankensteilheit nicht so groß zu wählen, aber je nach Impulsverzerrung läuft man Gefahr, entweder an der einen oder der anderen Bitgrenze das falsche Datum auszuwerten.

Bei der Realisierung von FlexRay-Datenübertragungssystemen, insbesondere bei komplexen Systemen umfassend mehrere Sternkoppler und passive Netzwerke, hat sich zudem gezeigt, dass die dort auftretenden asymmetrischen Verzögerungszeiten so groß sind, dass sie ein durch das FlexRay-Protokoll vorgegebenes Zeitbudget übersteigen. Gemäß FlexRay-Protokoll wird mit fallender BSS (Byte Start Sequence)-Flanke ein Abtastzähler synchronisiert, d.h. zurück auf 1 gesetzt. Bei einem Zählerstand von 5 wird abgetastet. Bei einer 8-fachen Überabtastung (sogenanntes Oversampling), wie sie derzeit in FlexRay vorgesehen ist, verbleiben zwischen dem Abtastzeitpunkt (5. Abtastwert) und dem 8. Abtastwert also noch 3 Abtasttakte die bei einem Kommunikationscontroller-Takt von 80 MHz jeweils 12,5 ns, in der Summe also einem Zeitbudget von 37,5 ns entsprechen. Dieses Zeitbudget dient eigentlich zum Ausgleich von asymmetrischen Verzögerungen aufgrund der Differenz von fallender zu steigender Flankensteilheit. Falls jedoch - wie dies bei komplexen Netztopologien der Fall sein kann - die asymmetrische Verzögerung das vorgesehene Zeitbudget übersteigt, führt dies dazu, dass bei einer Abtastung beim 5. Abtasttakt (Zählerstand des Abtastzählers auf 5) ein falscher Wert ermittelt wird, weil dasjenige Bit, das eigentlich hätte abgetastet werden sollen, auf Grund der asymmetrischen Verzögerung schon zu einem früheren Zeitpunkt anlag und durch den frühen Flankenwechsel nicht mehr anliegt. Eine analoge Behandlung gilt für eine asymmetrische Verzögerung nach spät. Dann steht ein Zeitbudget von 4 Abtasttakten entsprechend 50 ns zur Verfügung. Die Folge eines Übersteigens des Zeitbudgets nach früh oder spät sind Decodierungsfehler, es werden also falsche Daten empfangen.

Diese Decodierungsfehler können zwar durch geeignete Fehlererkennungsalgorithmen erkannt werden, so dass eine erneute Übertragung des Bits oder des gesamten Datenrahmens veranlasst werden kann. Als Fehlererkennungsalgorithmus kann beispielsweise ein sog. Parity Bit oder ein sog. Cyclic Redundancy Check (CRC) eingesetzt werden. Der Nachteil eines häufigen Ansprechens des Fehlererkennungsalgorithmus liegt jedoch in der damit verbundenen schlechteren Verfügbarkeit des Datenübertragungssystems, da die fehlerhaften Daten bspw. erneut übertragen oder verworfen werden.

Zusammenfassend kann gesagt werden, dass durch das FlexRay-Protokoll Vorgaben gemacht werden, die der Physical Layer - zumindest bei komplexen Netztopologien - nicht halten kann. Der vorliegenden Erfindung liegt deshalb die Aufgabe zugrunde, diesen Widerspruch zu lösen und eine Möglichkeit zu schaffen, wie Daten über das Datenübertragungssystem mit hoher Übertragungsrate, hoher Zuverlässigkeit und hoher Verfügbarkeit des Datenübertragungssystems übertragen und bei dem empfangenden Teilnehmer decodiert werden können.

Zur Lösung dieser Aufgabe wird ausgehend von dem Verfahren der eingangs genannten Art vorgeschlagen, dass der Abstand eines zwingend in einem in dem Datenübertragungssystem verwendeten Übertragungsprotokoll vorgesehenen Wechsels des Signals von steigender zu fallender oder von fallender zu steigender Flanke gemessen wird.

Aus dem gemessenen Abstand wird vorzugsweise eine Tendenz der asymmetrischen Verzögerung, insbesondere des systematischen Anteils der asymmetrischen Verzögerung, ermittelt. In Abhängigkeit von dem gemessenen Abstand oder der ermittelten asymmetrischen Verzögerung des übertragenen Signals können geeignete Maßnahmen zur Verbesserung der Abtastung der empfangenen Bits getroffen werden. Bspw. kann der Zeitpunkt einer Abtastung der empfangenen Bits in Abhängigkeit von dem gemessenen Abstand oder der ermittelten asymmetrischen Verzögerung variabel eingestellt werden. Alternativ oder zusätzlich kann der gemessene Abstand oder die ermittelte asymmetrische Verzögerung zu Diagnosezwecken eingesetzt werden.

Vorteile der Erfindung

Ein entscheidender Unterschied zum bekannten Stand der Technik ist darin zu sehen, dass nicht mehr zu einem fest vorgegebenen, sondern vielmehr zu einem variablen Abtastzeitpunkt abgetastet wird. Erfindungsgemäß wird also die Lage des Abtastpunkts, das heißt bei einer n-fachen Überabtastung die Auswahl eines der n Abtastwerte, variabel gewählt. Die Auswahl kann dabei in dem empfangenden Knoten bspw. in Abhängigkeit von der Qualität der Signalübertragung zwischen dem sendenden und dem empfangenden Teilnehmerknoten, also von der Qualität des empfangenen Signals, erfolgen. Die Qualität der Signalübertragung bzw. des Signals kann für jede Verbindung zwischen zwei Teilnehmerknoten ermittelt und in den Teilnehmern abgespeichert werden. Es ist aber auch denkbar, dass die Qualität für jeden einzelnen übertragenen Datenrahmen ermittelt wird. Die Qualität des übertragenen Signals bzw. der Signalübertragung kann bspw. anhand einer asymmetrischen Verzögerung des übertragenen Signals ermittelt und der Abtastzeitpunkt entsprechend eingestellt werden.

Der erfindungsgemäße Vorschlag wird beispielhaft anhand eines FlexRay-Datenübertragungssystems beschrieben. Dies ist aber nicht als Einschränkung im Hinblick auf die Erfindung zu verstehen. Die vorliegende Erfindung kann für viele verschiedene Arten von Datenübertragungssystemen verwendet werden und ist ohne Weiteres auf vergleichbare Systeme übertragbar.

Erfindungsgemäß kann eine variable Verschiebung des Abtastzeitpunktes wie hier nachfolgend beschrieben, insbesondere bei FlexRay gegenüber der bisher vorgesehenen festen Vorgabe des Abtastzeitpunktes einen Zeitgewinn von mindestens einer Taktperiode des Abtasttaktes bringen. Diese Zeitersparnis kommt der vorliegenden Realisierung des Physical Layer Bausteins gemäß der Electrical Physical Layer Specification Version 2.1 entgegen und erlaubt durch die günstigere flexible Abtastung die Realisierung der vollen Übertragungsrate von 10 Mbit/sec bei komplexeren Topologien als der reinen Punkt-zu-Punkt Verbindung. Die im Protokoll fest vorgegebene Konstante cStrobeOffset von 5 für die Lage des Abtastpunktes wird erfindungsgemäß abhängig von den Messergebnissen für den Abstand bzw. die asymmetrische Verzögerung bzw. den systematischen Anteil der asymmetrischen Verzögerung erhöht oder verringert oder sie bleibt gleich.

Durch das Ausmessen der Verzögerung eines zwingend im Protokoll vorgesehenen Wechsels von steigender und fallender Flanke des empfangenen Signals auf dem aktuellen Übertragungsweg, kann man den Abtastzeitpunkt gezielt verschieben, um damit die Robustheit der Übertragung zu erhöhen. Die Verzögerung zwischen steigender und fallender Flanke wird auch als Impulsverzerrung oder asymmetrisches Delay bezeichnet. Die Messung wird vorzugsweise für jeden aktuellen Datenübertragungsweg mindestens einmal vorgenommen. Eine Erhöhung der Messwerte verringert dabei den Einfluss von stochastischen Verfälschungen. Insbesondere kann man die Messungen auch während der Datenübertragung weiter fortführen und ggf. den Abtastzeitpunkt im Laufe der Übertragung korrigieren. Es ist auch möglich, Fehler zu erkennen, wenn aus mehrfachen Messungen widersprüchliche Abtastzeitpunkte resultieren sollten.

Mit der vorliegenden Erfindung ist eine individuelle Anpassung jedes Teilnehmer-Empfängers an den Teilnehmer-Sender und den Datenkanal möglich. Diese Anpassung wird vorzugsweise für jeden Datenrahmen vorgenommen. Durch die Anpassung des Abtastzeitpunktes wird die Übertragung robuster. Die Erfindung ist besonders einfach realisierbar, weil unter Umständen keine Zusatzhardware für einen Messzähler benötigt wird. Die Messung wird dann zu einem erheblichen Teil mit der ohnehin vorhandenen Hardware vorgenommen. Es muss nur die Position des Abtastzeitpunktes, die bisher konstant bei cStrobeOffset lag, variiert werden. Die Position wird nach der Messung des Abstands bzw. der asymmetrischen Verzögerung neu festgelegt.

Alternativ kann der gemessene Abstand zwischen zwingend im Übertragungsprotokoll vorgesehenen Wechseln von steigender und fallender Flanke des empfangenen Signals auf dem aktuellen Übertragungsweg, die daraus ermittelte asymmetrische Verzögerung und/oder der systematische Anteil der asymmetrischen Verzögerung auch zu Diagnosezwecken herangezogen werden. Insbesondere ist es denkbar, auf diese Weise eine fehlerhafte Sendeaktivität eines sendenden Teilnehmers, eine fehlerhafte Empfangsaktivität eines empfangenden Teilnehmers und/oder einen Defekt in der Kommunikationsverbindung zu detektieren.

Zeichnungen

Weitere Vorteile und vorteilhafte Ausgestaltungen der Erfindung ergeben sich aus der nachfolgenden Figurenbeschreibung und den dazugehörigen Figuren. Es zeigen:

Figur 1  eine systematische Verzerrung einer low-high Flanke nach früh bei mehreren Flanken und eine erfindungsgemäße Verschiebung des Abtastzeitpunktes um x Abtasttakte nach früh;

Figur 2  eine systematische Verzerrung einer low-high Flanke nach spät bei mehreren Flanken und eine erfindungsgemäße Verschiebung des Abtastzeitpunktes um x Abtasttakte nach spät;

Figur 3    eine Benutzung eines Messzählers zur Bestimmung der Kanalsymmetrie mittels FSS (Frame Start Sequence) und BSS (Byte Start Sequence);

Figur 4    eine Benutzung eines erweiterten Messzählers zur Bestimmung der Kanalsymmetrie mittels FSS und BSS;

Figur 5    einen erfindungsgemäßen Teilnehmer eines Datenübertragungssystems im Detail;

Figur 6    eine beispielhafte Topologie eines erfindungsgemäßen Datenübertragungssystems mit zwei Sternen und acht Knoten, zwischen denen Daten übertragen werden;

Figur 7    einen ersten worst case, bei dem ein Empfängerknoten den langsamsten Takt aufweist und die Zeit zwischen fallender und steigender Flanke verkürzt ist;

Figur 8    eine korrekte Abtastung des Signals unter Berücksichtigung einer Zeitreserve für den Fall nach Figur 7;

Figur 9    einen zweiten worst case, bei dem ein Empfängerknoten den schnellsten Takt aufweist und die Zeit zwischen fallender und steigender Flanke verlängert ist;

Figur 10    eine korrekte Abtastung des Signals unter Berücksichtigung einer Zeitreserve für den Fall nach Figur 10;

Figur 11    Bestimmung der Kanalverzerrung (Verkürzung oder Verlängerung der low-Phase eines Signals zwischen zwei BSS) mittels eines Datenbytes 0x00, das vorzugsweise als erstes Datenbyte eines Datenrahmens zusätzlich gesendet wird;

Figur 12    Abspeichern des Abtastzähler-Werts, bei dem die BSS high-low Flanke entdeckt worden ist, zur Messung der Kanalverzerrungen für den Fall nach Figur 12;

Figur 13    grober Aufbau eines Datenrahmens nach dem FlexRay-Protokoll;

Figur 14    asymmetrische Verzerrungen bei einer high-low Flanke einer BSS bzw. bei einer low-high Flanke einer FES (Frame End Sequence);

Figur 15    resultierende Verzögerungen zwischen ausgesandtem Signal (TxD) und empfangenem Signal (RxD) für steigende und fallende Flanken;

Figur 16    eine zu übertragende Impulsfolge mit definierter Synchronisationsstelle;

Figur 17    eine Verzerrung einer low-high Flanke nach früh und eine Abtastung eines falschen Bitwertes bei zu langsamem Abtasttakt; und

Figur 18    eine Verzerrung einer low-high Flanke nach spät und eine Abtastung eines falschen Bitwertes bei zu schnellem Abtasttakt;

Beschreibung der Ausführungsbeispiele

Die Vernetzung von Steuergeräten, Sensorik und Aktuatorik mit Hilfe eines Kommunikationssystems und einer Kommunikationsverbindung bspw. in Form eines Bussystems hat in den letzten Jahren sowohl beim Bau von modernen Kraftfahrzeugen als auch im Maschinenbau, insbesondere im Werkzeugmaschinenbereich, und in der Automatisierung drastisch zugenommen. Synergieeffekte durch Verteilung von Funktionen auf mehrere Teilnehmer (z.B. Steuergeräte) des Kommunikationssystems können dabei erzielt werden. Man spricht hierbei von verteilten Systemen.

Die Kommunikation zwischen verschiedenen Teilnehmern eines solchen Datenübertragungssystems findet mehr und mehr über ein Bussystems statt. Der Kommunikationsverkehr auf dem Bussystem, Zugriffs- und Empfangsmechanismen, sowie Fehlerbehandlung werden über ein Protokoll geregelt. Ein bekanntes Protokoll ist beispielsweise das FlexRay-Protokoll, wobei derzeit die FlexRay-Protokollspezifikation v2.1 zu Grunde liegt. Bei FlexRay handelt es sich um ein schnelles, deterministisches und fehlertolerantes Bussystem, insbesondere für den Einsatz in Kraftfahrzeugen. FlexRay kommuniziert über eine oder zwei physikalisch getrennte Leitungen mit einer Datenrate von jeweils maximal 10 Mbit/sec. Selbstverständlich kann FlexRay aber auch mit niedrigeren Datenraten betrieben werden. Die beiden Kanäle entsprechen dabei der physikalischen Schicht, insbesondere des sogenannten OSI (Open System Architecture) Schichtenmodells. Diese dienen hauptsächlich der redundanten und damit fehlertoleranten Übertragung von Botschaften, können jedoch auch unterschiedliche Botschaften übertragen, wodurch sich dann die Datenrate verdoppeln würde. Es ist ebenfalls denkbar, dass sich das übertragene Signal aus der Differenz der beiden über die Leitungen übertragenen Signale als ein Differenzsignal ergibt. Die Signalübertragung über die physikalische Schicht kann elektrisch, optisch oder auf eine beliebig andere Art erfolgen.

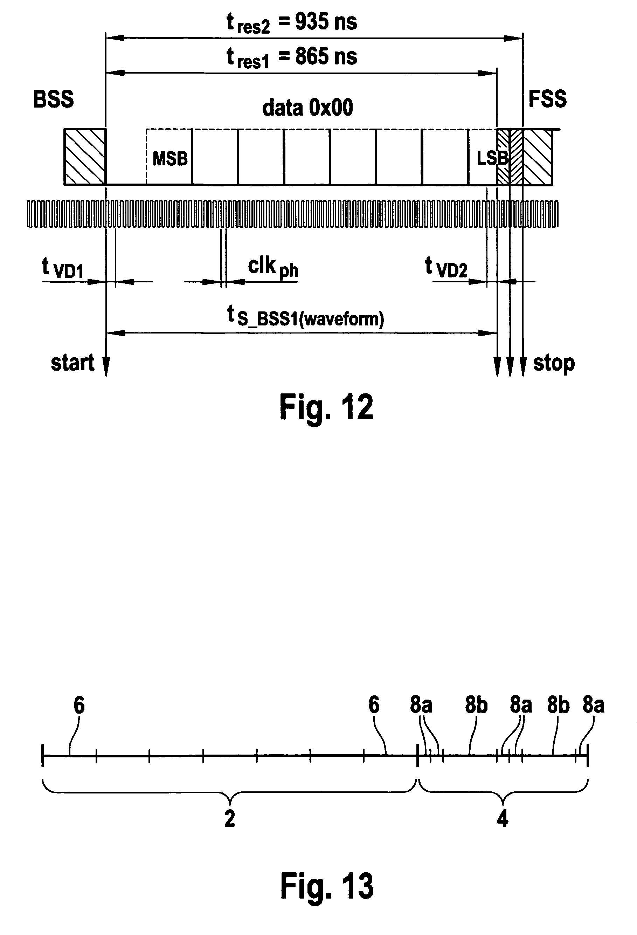

Das FlexRay-Protokoll arbeitet nach dem Prinzip des Time Division Multiple Access (TDMA), wobei den Teilnehmern bzw. den zu übertragenden Botschaften feste Zeitschlitze zugewiesen werden, in denen sie einen exklusiven Zugriff auf die Kommunikationsverbindung haben. Die Zeitschlitze wiederholen sich dabei in einem festgelegten Kommunikationszyklus, so dass der Zeitpunkt, zu dem eine Botschaft über den Bus übertragen wird, exakt vorausgesagt werden kann und der Buszugriff deterministisch erfolgt. In Fig. 13 ist beispielhaft ein Kommunikationszyklus eines FlexRay-Kommunikationssystems dargestellt. Ein statischer Teil (sog. statisches Segment) ist mit dem Bezugszeichen 2 bezeichnet und ein dynamischer Teil (sog. dynamisches Segment) ist mit dem Bezugszeichen 4 bezeichnet. Die Zeitschlitze, die auch als Rahmen oder Frames bezeichnet werden, sind mit dem Bezugszeichen 6 bezeichnet. Um die Bandbreite für die Übertragung von Botschaften auf dem Bussystem optimal zu nutzen, unterteilt FlexRay den Zyklus in einen statischen Teil (sog. statisches Segment) 2 und einen dynamischen Teil (sog. dynamisches Segment) 4. Die festen Zeitschlitze 6 befinden sich dabei im statischen Teil 2 am Anfang eines Buszyklusses. Im dynamischen Teil werden die Zeitschlitze 8a, 8b dynamisch vorgegeben. Darin wird nun der exklusive Buszugriff jeweils nur für eine kurze Zeit 8a, für die Dauer mindestens eines sogenannten Minislots, ermöglicht. Nur wenn innerhalb eines Minislots ein Buszugriff erfolgt, wird der Zeitschlitz 8a auf die für den Zugriff benötigte Zeit 8b verlängert. Damit wird Bandbreite also nur verbraucht, wenn sie auch tatsächlich benötigt wird. Die Zeitschlitze 8b zur Datenübertragung im dynamischen Segment 4 entsprechen von ihrer Größe und Aufbau her im wesentlichen den festen Zeitschlitzen 6 des statischen Segments 2.

Um synchrone Funktionen zu realisieren und die Bandbreite durch kleine Abstände zwischen zwei Botschaften zu optimieren, benötigen die Teilnehmer in dem Kommunikationsnetzwerk eine gemeinsame Zeitbasis, die sogenannte globale Zeit. Für die Uhrensynchronisation werden Synchronisationsnachrichten im statischen Teil 2 des Zyklus übertragen, wobei mit Hilfe eines speziellen Algorithmus entsprechend der FlexRay-Spezifikation die lokale Uhrzeit eines Teilnehmers so korrigiert wird, dass alle lokalen Uhren zu einer globalen Uhr synchron laufen.

Die Erfindung wird beispielhaft anhand eines FlexRay-Datenübertragungssystems beschrieben. Dies ist aber nicht als Einschränkung im Hinblick auf die Erfindung zu verstehen. Vielmehr kann die Erfindung für viele verschiedene Arten von Datenübertragungssystemen verwendet werden und ist ohne Weiteres auf vergleichbare Systeme übertragbar.

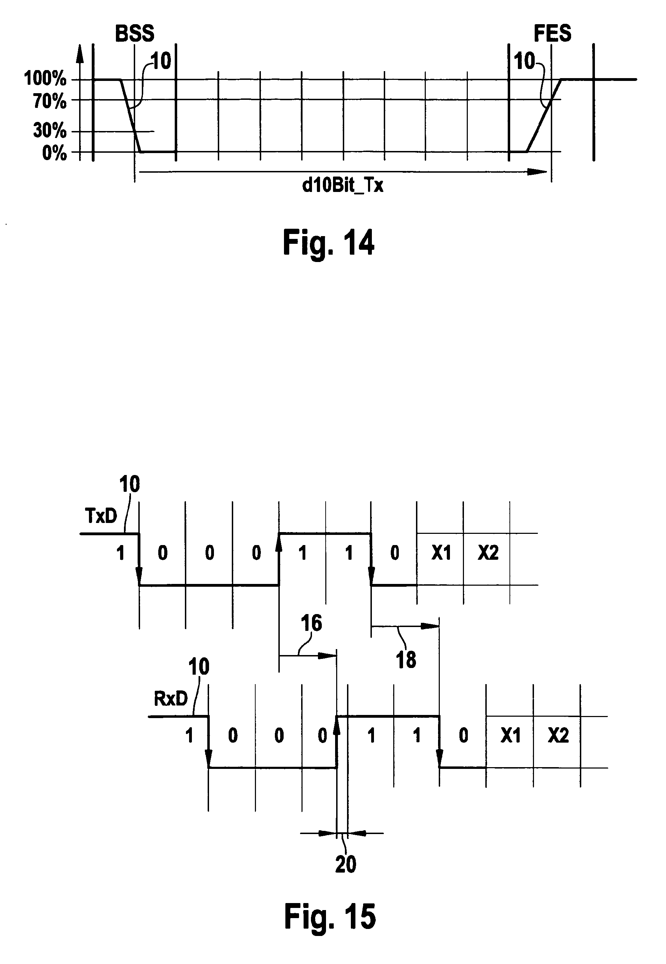

In Fig. 14 ist gezeigt, dass Signale 10, die über Verbindungsleitungen der Kommunikationsverbindung von einem sendenden Teilnehmer des Kommunikationssystems an einen empfangenden Teilnehmer übertragen werden, im Bereich von Flankenwechseln von high nach low oder von low nach high keinen idealen rechteckigen Verlauf, sondern einen schrägen, rampenförmigen Verlauf aufweisen. Es ist zu erkennen, dass die Steigung der fallenden Flanke und der steigenden Flanke unterschiedlich stark ist. Dieser Unterschied und unterschiedliche Flankendauern führen dazu, dass die resultierenden Verzögerungen zwischen ausgesandtem Signal 10 (TxD) und empfangenem Signal 10 (RxD) für steigende und fallende Flanken unterschiedlich sind (vgl. Fig. 15). Abhängig von der Differenz der Verzögerungen für steigende Flanken 16 und fallende Flanken 18 ergibt sich eine asymmetrische Verzögerung 20. In Figur 15 ist oben der Verlauf des ausgesandten Signals 10 (TxD) und unten der Verlauf des empfangenen Signals 10 (RxD) dargestellt. Die Verzögerungen 16, 18 betreffen die Differenz der entsprechenden Flanken zwischen dem ausgesandten Signal TxD und dem empfangenen Signal RxD.

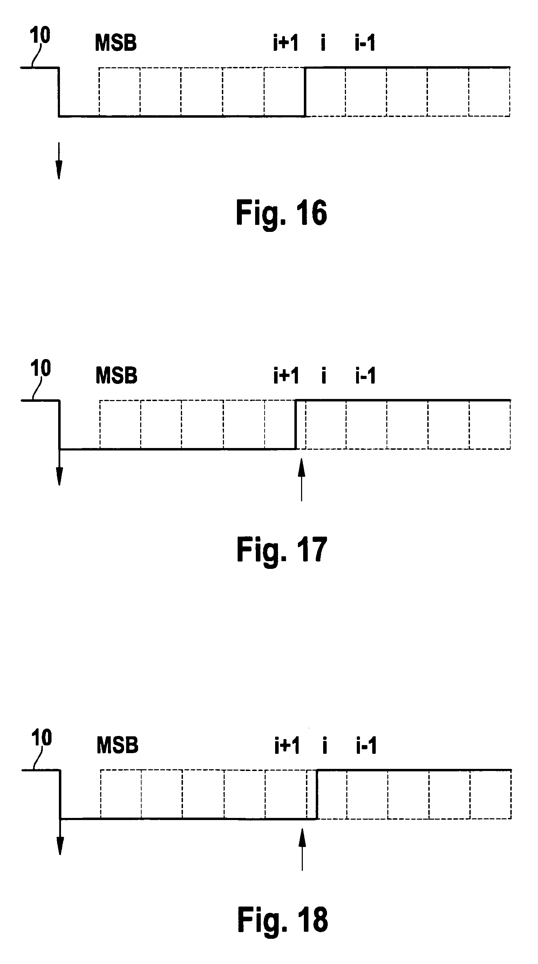

Bei der Übertragung von Daten oder Botschaften über ein Bussystem mit solchen Verzögerungen, werden Impulse verzerrt, weil High-to-Low- bzw. Low-to-High-Flanken auf dem Übertragungsweg unterschiedlich stark verzögert werden. Wird beim Stand der Technik der gesendete Impuls im Empfänger mit dem dort fest vorgegebenen Abtasttakt (der sogenannten Sampling Rate) mehrfach (zum Beispiel 8-mal pro Bit) abgetastet, so entscheidet die Lage des Abtastpunktes, d.h. die Auswahl genau eines dieser 8 Abtastwerte, ob das Datum richtig oder falsch abgetastet wird. Dies wird nachfolgend anhand der Figuren 16, 17 und 18 näher erläutert.

In Fig. 16 ist ein Impulsdiagramm für eine gesendete Bitfolge eines Signals 10 gezeigt, die mit einer high-low Flanke zwischen einem ersten Bit=high (1) und einem zweiten Bit=low (0) beginnt und danach mehrere Bits mit dem Wert low (0) und dann mindestens ein Bit i mit dem Wert high (1) enthält. Die Bitpositionen sind durch gestrichelte Linien gekennzeichnet; bspw. wird mit dem Most Significant Bit (MSB) die Übertragung begonnen. Bei der Übertragung kann durch die asymmetrische Verzögerung des Übertragungskanals eine Verschiebung der low-high-Flanke zwischen dem Bit (i+1) und Bit i entweder zu früheren Zeitpunkten (Fig. 17) oder zu späteren Zeitpunkten (Fig. 18) erfolgen.

Die Abtastung der Bitwerte erfolgt durch einen Abtasttakt (sog. Sample Clock) mit einer Frequenz, die ein n-faches der Datenbitrate ist, aber mit einer zugelassenen Frequenzabweichung zwischen Sender und Empfänger. Das kann dazu führen, dass die Abtastung des Bitwertes nicht mehr genau in der Mitte erfolgt. Fallen nun die asymmetrische Verzerrung und die Verschiebung des Abtastzeitpunktes 12 pro Bitposition ungünstig zusammen, so kann es dazu kommen, dass für den Bitwert (i+1) der falsche Wert 1 erkannt wird (Fig. 17) oder für den Bitwert i der falsche Wert 0 (Fig. 18). Das ist dadurch bedingt, dass im Stand der Technik ein fester Abtastzähler (sample-counter)-Wert k mit 1<=k<=n benutzt wird. Mit anderen Worten, es ist genau festgelegt, welcher der n Abtastwerte eines Bits tatsächlich als Bitwert herangezogen wird.

Durch die starre Wahl des Abtastzeitpunktes 12 pro Bit (zum Beispiel bei 8 Abtastwerten pro Bit auf den 5. Abtastwert, in der Mitte eines Bits) ist sowohl der Einfluss der asymmetrischen Verzögerung als auch die Frequenzabweichung und die zusätzliche Zeitdiskretisierung durch die Abtastung ein Problem und stellt hohe Anforderungen an den Übertragungskanal. Eine Erhöhung der Flankensteilheit zur Verringerung der asymmetrischen Verzögerungen brächte zwar Vorteile für das Timing, würde aber andererseits technisch anspruchsvollere und damit teurere Komponenten voraussetzen und zudem das EMV-Verhalten des Datenübertragungssystems ungünstig beeinflussen. Aber je nach Impulsverzerrung läuft man Gefahr, entweder an der einen oder der anderen Bitgrenze das falsche Datum auszuwerten.

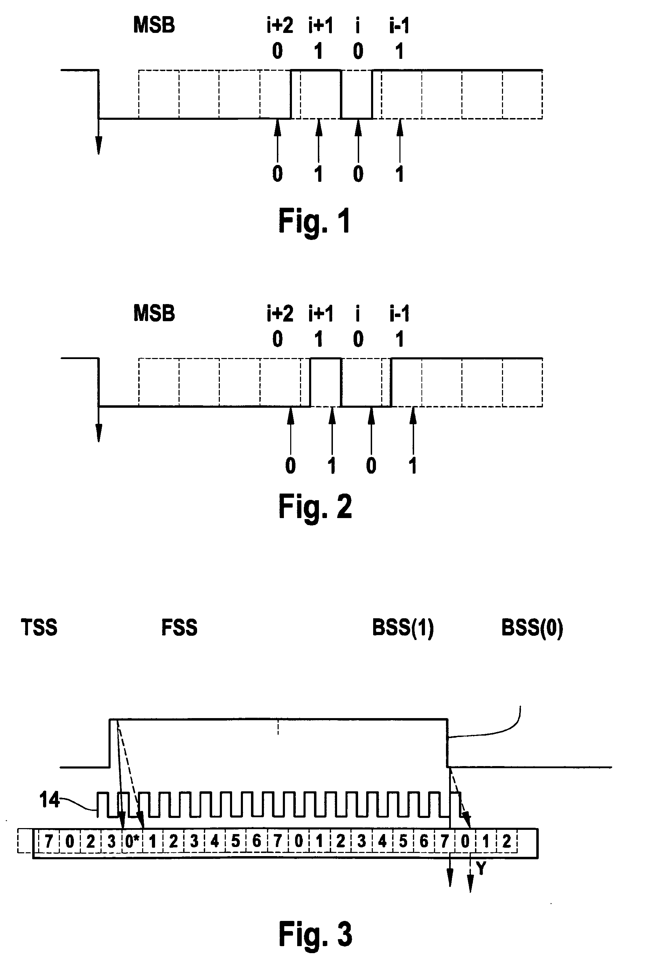

Die asymmetrischen Verzerrungen im Übertragungskanal besitzen einen systematischen Anteil, d.h. die entsprechenden Flanken werden relativ zueinander gleichartig verzögert. Zur Kompensation dieses systematischen Anteils wird erfindungsgemäß vorgeschlagen, je nach Variante a oder b den Abtastzeitpunkt 12 um x Abtasttakte zu verschieben, zu einem Abtastzähler-Wert k+x, mit x<0 (vgl. Fig. 1) oder x>0 (vgl. Fig. 2), um dadurch die Robustheit der Übertragung zu erhöhen (korrigierter Abtastzeitpunkt 12').

Um die Größe der entsprechenden sinnvollen systematischen Verschiebung des Abtastzeitpunktes 12 bei einer Übertragung zu ermitteln, muss man die Übertragungsstrecke ausmessen können. Dazu benötigt man für das übertragene Signal 10 vor der Übertragung der Informationsbits in einem Rahmen 6, 8b mindestens eine Folge von zwei Flanken in unterschiedlicher Richtung mit definiertem Abstand zueinander, und muss gewährleisten, dass bei der Übertragung dieses Flankenpaares die gleichen systematischen Bedingungen vorliegen, wie bei der Übertragung der Informationsbits in diesem Kanal. Sinnvoll ist es dazu, wenn man schon beim Aufbau des Übertragungskanals auf genau definierte Bitfolgen zurückgreifen kann (z.B. Frame Start Bits oder Byte Start Sequenzen). Alternativ besteht auch die Möglichkeit, genau definierte Datenworte zum Zwecke der Messung in das Protokoll einer Datenübertragung zusätzlich einzufügen. Dazu eignet sich ein Datenwort mit sehr großem Abstand zwischen den zwei Flanken (fallender und steigender Flanke), um den Einfluss der Taktfrequenzabweichung genauer berücksichtigen zu können. Ein solches Datenwort ist bspw. 0x00 (binär: 00000000) oder 0xFF (binär: 11111111). Ebenfalls geeignet ist ein Datenwort mit sehr vielen Flanken, um den Einfluss stochastischer Elemente, wie bspw. Störungen auf dem Kanal, durch Mittelwertbildung der Messergebnisse, Majority-Voting oder andere Verfahren zu verringern. Ein solches Datenwort ist bspw. 0x55 (binär: 01010101) oder 0xAA (binär: 10101010). Weiterhin ist es möglich, den zunächst gemessenen Wert für den systematischen Anteil der asymmetrischen Verzögerung im Verlauf der Datenübertragung anzupassen. Das ist insbesondere dann sinnvoll, wenn zwischen den Synchronisationszeitpunkten (Reset des Abtastzählers) größere Abstände bestehen und damit Daten am Ende eines solchen Abschnitts bei einer größeren Abweichung des Taktes wegen der dadurch verursachten relativen Verschiebung des Abtastzeitpunktes 12 mehr anfällig für Fehler sind.

In einer konkreten Ausgestaltung der Erfindung wird zur Messung eine Frame Start Sequenz (FSS) zusammen mit dem ersten Bit einer Byte Start Sequenz (BSS) gemäß FlexRay-Protokoll Spezifikation v2.1 herangezogen. Diese Bitfolge besteht aus zwei high-Bits, denen jeweils mindestens ein low-Bit vorausgeht und folgt. Damit besteht die Möglichkeit, die Impulsverzerrung (die asymmetrische Verzögerung auf dem Übertragungsweg) zu bestimmen. Geht man von einer Bitdauer von 100 ns und einer Abtastung mit einer 80 MHz Taktrate aus, so erhält man eine Überabtastung von n=8. Fig. 3 zeigt die Impulsfolge und den zugehörigen Abtasttakt (sample clock) und den Messzähler.

Für die Bestimmung des Messwertes benutzt man sinnvollerweise einen modulo-n Zähler mit mindestens ld (n) Bits, d.h. für eine n=8-fache Überabtastung benötigt man einen ld(8)=3 Bit Messzähler. Für Verzerrungen, die bis 50% einer Bitzeit und mehr betragen können, ist der Zähler noch um mindestens 1 Bit zu erweitern. Dieser Zähler wird durch den ersten high-Wert der FSS synchron mit dem Abtasttakt auf '0' gesetzt (durchgezogener Pfeil in Fig. 3) oder mit dem nächsten Takt auf '1' (gestrichelter Pfeil in Fig. 3). Mit dem darauf folgenden ersten low-Wert der BSS wird der Zählerstand synchron mit dem Abtasttakt abgespeichert, gegebenenfalls auch hier einen Takt später zum Messpunkt Y. Der gespeicherte Wert ist ein Maß dafür, wie die Verschiebung des Abtastzeitpunktes x gewählt werden muss, um die systematische Verzerrung zu berücksichtigen. Im gezeigten Beispiel von Fig. 3 ist an der Stelle Y der Wert=1 und damit die Verzerrung gleich 0, d.h. x ist zu '0' zu setzen. Der Zeitpunkt Y stellt den Zeitpunkt dar, nach dem der Wert '0' der Bitfolge durch den Abtasttakt abgespeichert wurde. Dabei ist auch der Messzähler um einen Wert weitergezählt worden. Durch die Zeitdiskretisierung mit dem Zähltakt (Asynchronität des Taktes zur empfangenen Bitfolge) und der Frequenzabweichung des Taktes im Empfänger kann selbst bei unverzerrtem Impuls FSS-BSS(1) der Länge von genau zwei Bitzeiten der gemessene Wert zwischen '0' und '2' liegen. Der Wert '0' wird bei unverzerrter Impulsübertragung nur erreicht, wenn der Empfängertakt nicht schneller ist als der Sendertakt und der Wert '2' nur, wenn der Empfängertakt nicht langsamer als der Sendertakt ist. In Abhängigkeit von dem gemessenen Wert, insbesondere wenn er ungleich '0', '1' oder '2' ist, ist zu unterscheiden, ob die Synchronisation des Abtastzählers mit einer high-low- oder einer low-high-Flanke beginnt, d.h. ob die realen Verzerrungen in die gleiche Richtung gehen wie beim Messen, oder in die andere Richtung. Im Beispiel von FlexRay wird der Abtastzähler mit der high-to-low Flanke von BSS(1) zu BSS(0) Bit getriggert.

Ein Wert von '2', '3' oder '4' sollte deshalb zu einem negativen Wert von x führen. Tabelle 1 zeigt die vorgeschlagenen Werte, je nachdem, ob man einen , zwei oder gar drei Takte Verschiebung zulässt. Ein allgemeiner Fall ist angegeben, wenn man zwischen positiver und negativer Verschiebung auch im Grenzbereich noch entscheiden kann. Gegebenenfalls ist dazu die Auflösung des Messzählers durch eine erweiterte Bitbreite noch zu erhöhen. Insbesondere aber, wenn man auch mit stochastischen Störungen rechnen muss ist es sinnvoll, für die Verschiebung des Abtastpunktes nicht mehr als einen Takt vorzusehen. Das macht die Abtastung robuster.

**Tabelle 1**: Bestimmung des Korrekturwertes x aus dem Messwert des 3 Bit Messzählers nach Figur 3

| Verschiebung maximal | für 1 Takt | für 2 Takte | für 3 Takte | allgemein |
|:---:|:---:|:---:|:---:|:---:|
| **Messwert bei Y** | **x** | **x** | **x** | **x** |
| 0 | 0 | 0 | 0 | 0 |
| 1 | 0 | 0 | 0 | 0 |
| 2 | -1 | -1 | -1 | -1 |
| 3 | -1 | -2 | -2 | -2 |
| 4 | -1 | -2 | -3 | -3 |
| 5 | 1 | 2 | 3 | 3 |
| 6 | 0 | 1 | 2 | 2 |
| 7 | 0 | 1 | 1 | 1 |

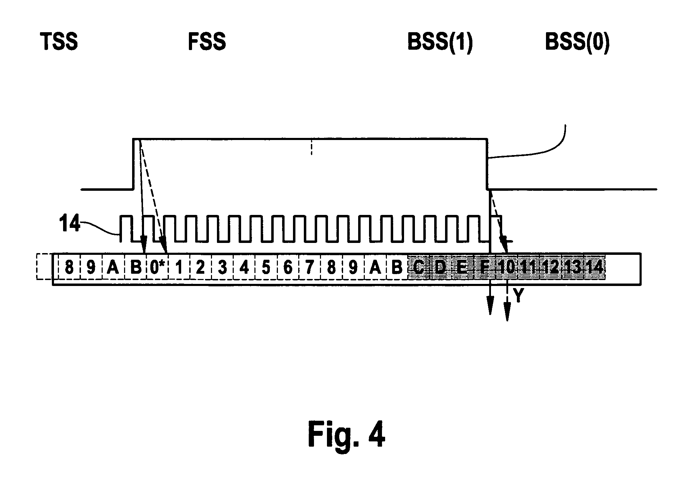

Zur weiteren Erhöhung der Robustheit des Messverfahrens ist es auch sinnvoll, den Messzähler mit mindestens einem oder besser mindestens zwei zusätzlichen Bits zu versehen und die Auswertung der BSS high-to-low Flanke von einem Mindestzählerstand (z.B. dezimal 12, d.h. hexadezimal 0xC) abhängig zu machen (vgl. Fig. 4). Dadurch sind die Korrekturwerte von Tabelle 2 aus den Messwerten ableitbar. Die erste Spalte für den Wert x gilt den theoretisch möglichen Verschiebungen der Abtastzeitpunkte 12; die vorgeschlagene Verschiebung um maximal einen Takt ist robuster und ermöglicht auch bei vorhandenen stochastischen Einflüssen noch eine verlässliche Korrektur. Zwischen diesen beiden Extremen sind beliebige Zwischenvarianten möglich, die aus anderen Gesichtspunkten heraus entschieden werden können.

**Tabelle 2**: Bestimmung des Korrekturwertes x aus dem Messwert des 5-Bit Messzählers nach Figur 4

| Verschiebung maximal | möglich | vorgeschlagen | adaptiv nach mehreren Messungen |
|:---:|:---:|:---:|:---:|
| **Messwert bei Y** | **x** | **x** | **x** |
| 0X0C | 4 | 0 | 1 |
| 0x0D | 3 | 0 | 1 |
| 0x0E | 2 | 0 | 1 |
| 0x0F | 1 | 0 | 1 |
| 0x10 | 0 | 0 | 0 |
| 0x11 | 0 | 0 | 0 |
| 0x12 | -1 | -1 | -1 |
| 0x13 | -2 | -1 | -2 |
| 0x14 | -3 | -1 | -2 |

Zur weiteren Erhöhung der Robustheit kann auch noch der jeweils abgetastete Wert mit vorangegangenen und/oder nachfolgenden Abtastwerten verglichen werden und aus diesen Werten per Mehrheitsentscheid (Majority-Voting) das gültige Signal ermittelt werden. Dazu ist das abgetastete Eingangssignal von Fig. 3 oder 4 schon das gevotete Eingangssignal, in dem kleinere Störungen schon unterdrückt sind.

Die Messverfahren nach Fign. 3 und 4 in Verbindung mit Tabellen 1 und 2 sind dann sinnvoll, wenn der systematische Anteil der Kanalverzerrungen (asymmetrische Verzögerung, verschiedene Verzögerungen von high-low und low-high Flanke) höher ist als der stochastische Anteil (EMV-Einstrahlung, Störungen). Das ist in einem FlexRay-Kommunikationssystem gegeben. In der speziellen Ausgestaltung ist aber wegen der immer vorhandenen stochastischen Anteile der theoretisch angegebene Korrekturwert (z.B. Tabelle 2) wenig sinnvoll. Um stochastische Einflüsse bewerten zu können, und damit eine höhere Genauigkeit für den Korrekturwert zu gewinnen, sind mehrere Messungen durchzuführen, wie auf die in Fig. 3 bzw. 4 gezeigte Art und Weise. Sofern nicht im Protokoll bereits vorhanden, sind dazu geeignete zusätzliche genau definierte Impulsformen am Anfang einer Übertragung vorzusehen, die vor den eigentlichen Daten und sonstigen Informationen (z.B. in einer Kopfzeile, dem sog. Header) übertragen werden.

Anstelle der Abspeicherung der 5 Bits des Messzählers von Fig. 4 kann in Verbindung mit Tabelle 2 auch gleich der vorgeschlagene Korrekturwert (ein Bit) gespeichert werden. Das erspart Hardware-Aufwand und erlaubt ein einfaches voting bei mehreren Messungen, für die jeweils auch nur ein Korrekturwert von 1 Bit gespeichert wurde. Dazu kann man bspw. ein Byte mit dem Datenwert 0xAA oder 0x55 übertragen, um möglichst viele Impulse auf ihre Verzerrung untersuchen zu können. Unabhängig davon, ob jetzt bspw. die high-Phase eines Impulses über 2, 3 oder 4 Bitzeiten, oder nur über eine erfolgt, ist nur die Abweichung des Messwertes von Messung eines high-Impulses der Korrekturwert x negativ. Bei low-Impulsen wird er positiv. Aus allen gemessenen Werten ist zum Abschluss ein summarischer Korrekturwert durch Mittelwertbildung, Voting oder andere geeignete Verfahren zu bilden.

Sind demgegenüber die Einflüsse der Taktabweichung zwischen Sender und Empfänger dominant, so ist es günstig, mindestens einen high- oder low-Impuls von größerer Dauer zum Messen zu verwenden, z.B. ein Byte mit dem Datenwert 0x00 oder 0xFF. Dadurch kann man die Taktungsgenauigkeit besser ermitteln und in der Verschiebung des Abtastzeitpunktes 12 besser berücksichtigen.

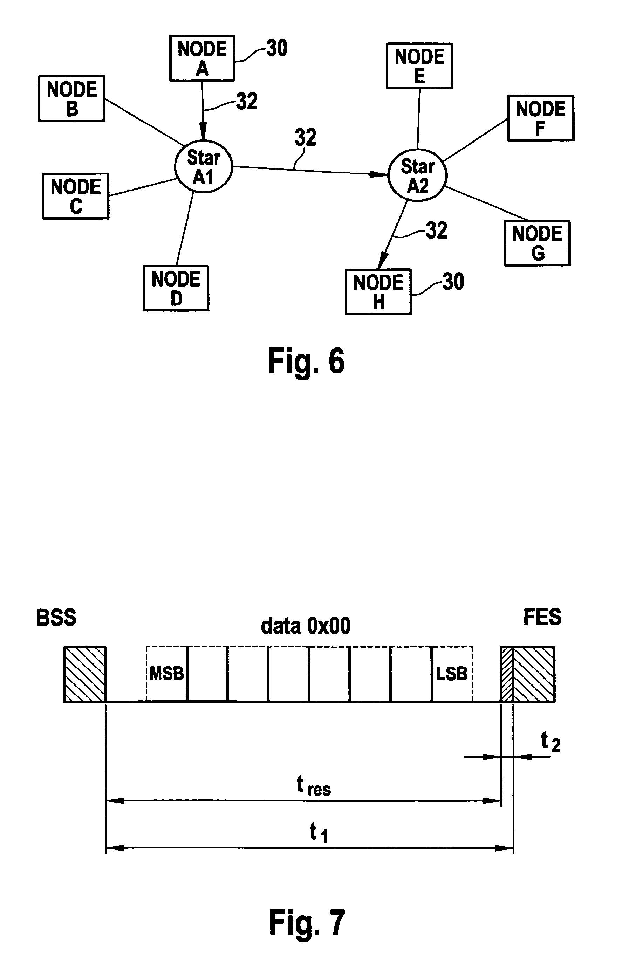

Zur Erläuterung zeigt Fig. 6 ein mögliches FlexRay-Datenübertragungssystem, mit zwei Sternen und 8 Teilnehmerknoten 30, zwischen denen Daten über Verbindungsleitungen 32 übertragen werden. Es ist ein möglicher Übertragungsweg von Knoten A zu Knoten H über zwei aktive Sterne A1 und A2 gezeigt. Dabei treten die beschriebenen Kanalverzerrungen auf. Theoretisch wäre es denkbar, mit einer zugelassenen Taktungsgenauigkeit von bspw. 1.500 ppm und den Kanalverzerrungen tfr von bspw. 35% einer Bitzeit das korrekte Sampling zu erfüllen. In dieser Betrachtung werden aber sowohl Ungenauigkeiten des Sendertaktes als auch Asymmetrien einzelner Schaltungsteile nicht genügend berücksichtigt, so dass die Physical Layer Spezifikation, die dafür die notwendigen Bedingungen schaffen würde, nicht realisierbar wäre. Deshalb wird erfindungsgemäß ein Verfahren vorgestellt, mit dem noch Zeit eingespart werden kann. Die schlimmsten Fälle (worst case 1 und worst case 2) sind dabei, dass der Empfänger den langsamsten Abtasttakt (sample clock) besitzt und die Zeit zwischen fallender und steigender Flanke also die tfr Zeit z.B. um 35ns gekürzt ist, oder dass der Empfänger den schnellsten Abtasttakt besitzt und die tfr Zeit um z.B. 35ns verlängert wird.

In Fig. 7 wird der erste worst case für die von TxD-Knoten A gesendete und am RxD-Knoten H ankommende verzerrte Wellenform (Waveform) gezeigt. Für die etwas zu schnelle Taktrate des Knotens A gilt: clk_pA=12,48125ns (schnell: -0,15% der Zykluszeit). Für die etwas zu langsame Taktrate des Knotens H gilt: clk_pH=12,51875ns (langsam: +0,15% der Zykluszeit). Die nominale Zykluszeit clk_p_nom beträgt 12,5ns. Für die von dem TxD-Knoten A an den RxD-Knoten H gesendete Wellenform gilt: t_1=10*8*clk_p_nom=1.000ns. Gemäß Protocol Specification 2.0.20, Seite 73, Tabelle 3-1 und Punkt 3.2.7.5 ist tfr=(n +/- 0,35)*gdBit und ist nicht abhängig von der tatsächlichen Taktrate des Senderknotens.

In dem Beispiel aus Figur 7 wird davon ausgegangen, dass die tfr-Asymmetrie gdBit -35% ist. Durch die Verzerrung bedingt kommt die FES (Frame End Sequenz)-Flanke um t_2=0,35*8*clk_p_nom=35ns zu früh. t_res ergibt sich aus der Differenz von t-1 und t_2 zu 965ns, was tfr entspricht. Der Abtastzähler (sample-counter) wird zunächst bei Erkennen der BSS-high-low Flanke auf '1' gesetzt (synchronisiert). Das erfolgt mit jedem Bytebeginn wegen der unterschiedlichen Takte im Sender und Empfänger neu. Falls die abgetasteten Werte noch gevoted werden (Mehrheitsbildung zur Unterdrückung kleinerer Störungen), wird der Bytebeginn erst nach einem voting delay t_VD1 erkannt. Das gevotete Signal verändert seinen Wert nach einem voting delay von 2 oder 3 Takten (bis zu 3 wegen Asynchronität von Wellenform und Takt zueinander).

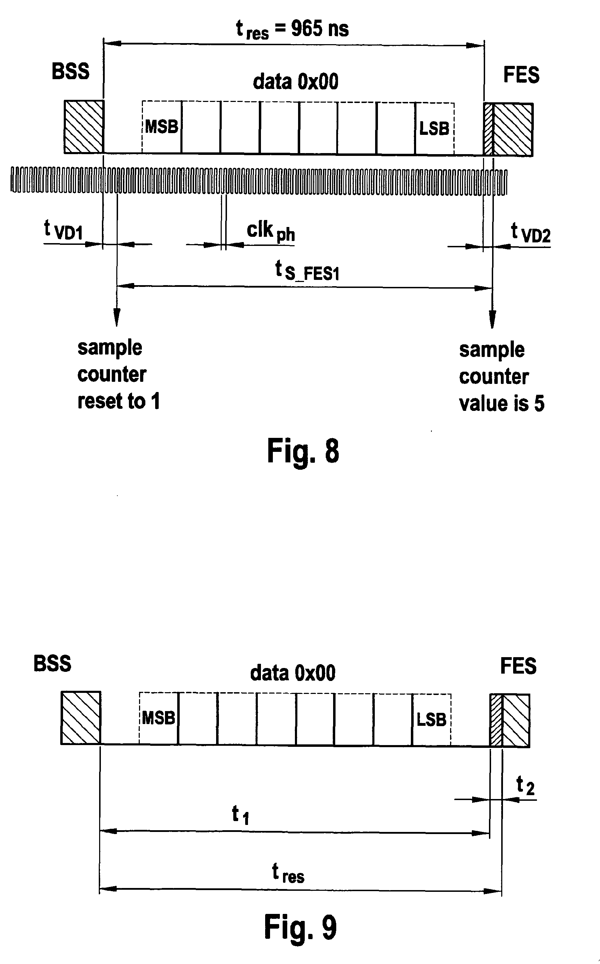

In Fig. 8 ist die von dem Empfangsknoten H abgetastete Wellenform dargestellt. Für die Verzögerung t_VD aufgrund des Voting gilt: 2*clk_pH <= t_VD <= 3*clk_pH. t_VD1 ist gleich 3*clk_pH und t_VD2 = 2*clk_pH. tS_FES1 = (9*8 + 4 + t_VD1 - t_VD2)*clk_pH = 77 * 12,51875ns = 963,94375ns. Für einen korrekt abgetasteten FES1-Wert gilt, dass t_res größer sein muss als tS_FES1. Aus dem Beispiel aus Figur 8 ergibt sich, dass die Abtastung vom Knoten H korrekt funktioniert mit einer Zeitreserve von 1,05625ns. Die Zeitreserve t_res - t_S_FES1 von ca. 1ns reicht aber nicht aus, um alle o.g. Belange zu erfüllen. Sie würde allenfalls ausreichen, um einen Jitter des Abtasttaktes von +/-0,5ns auszugleichen.

In Fig. 9 wird der andere worst case gezeigt. Für die etwas zu langsame Taktrate des Knotens A gilt: clk_pA=12,51875ns (langsam: +0,15% der Zykluszeit). Für die etwas zu schnelle Taktrate des Knotens H gilt: clk_pH=12,48125ns (schnell: - 0,15% der Zykluszeit). Die nominale Zykluszeit clk_p_nom beträgt auch hier 12,5ns. Für die von dem TxD-Knoten A an den RxD-Knoten H gesendete Wellenform gilt: t_1=10*8*clk_p_nom=1.000ns. Gemäß Protocol Specification 2.0.20, Seite 73, Tabelle 3-1 und Punkt 3.2.7.5 ist tfr=(n +/- 0,35)*gdBit und ist nicht abhängig von der tatsächlichen Taktrate des Senderknotens. In dem Beispiel aus Figur 9 wird davon ausgegangen, dass die tfr-Asymmetrie gdBit +35% ist. Durch die Verzerrung bedingt kommt die FES (Frame End Sequenz)-Flanke um t_2 = 0,35*8*clk_p_nom = 35ns zu spät. t_res ergibt sich aus der Summe von t_1 und t_2 zu 1035ns, was tfr entspricht.

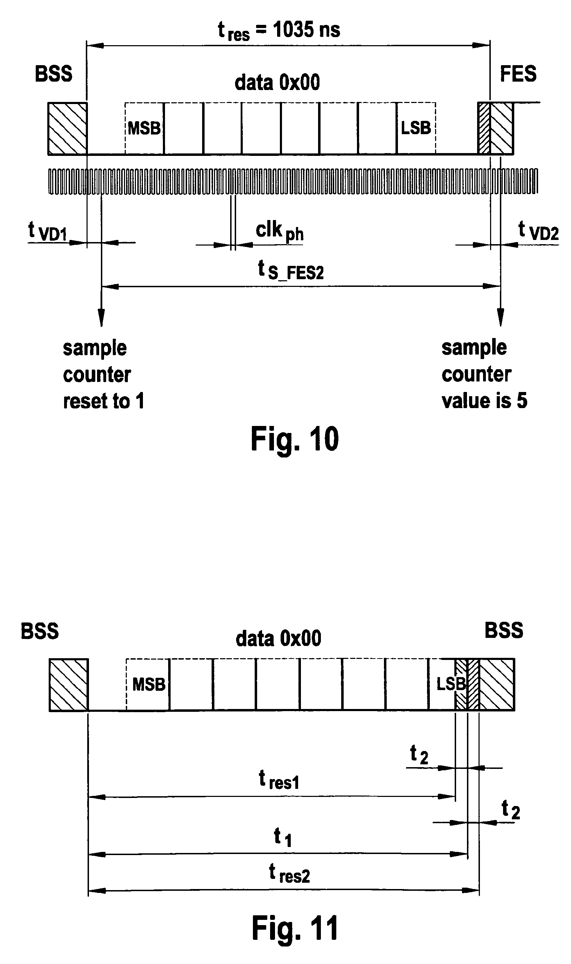

In Fig. 10 ist die von dem Empfangsknoten H abgetastete Wellenform dargestellt. Für die Verzögerung t_VD aufgrund des Voting gilt: 2*clk_pH <= t_VD <= 3*clk_pH. t_VD1 ist gleich 2*clk_pH und t_VD2 = 2*clk_pH. tS_FES2 = (10*8 + 4 + t_VD1 - t_VD2)*clk_pH = 84 * 12,48125ns = 1.048,425ns. Für einen korrekt abgetasteten FES2-Wert gilt, dass t_res kleiner sein muss als tS_FES2. Aus dem Beispiel aus Figur 10 ergibt sich, dass die Abtastung vom Knoten H korrekt funktioniert mit einer Zeitreserve t_S_FES2 - t_res von 13,425ns. Würde man hier den Abtastzeitpunkt 12 um einen Takt nach vorne verschieben, d.h. schon beim Abtastzähler-Wert '4' abtasten, bekäme man auch noch den richtigen Wert, aber die Zeitreserve würde auf weniger als 1ns (0,94375ns) zusammenschmelzen. Damit wäre es nicht mehr möglich, die o.g. zusätzlichen Verzerrungen einzubeziehen. Es würde deshalb zu Fehlern in der Übertragung kommen.

Aus den obigen Ausführungen ergibt sich also, dass die geforderten Bedingungen hinsichtlich Robustheit der Datenübertragung nur rein theoretisch bezüglich der Protokoll Spezifikation erfüllt sind. Es können in beiden Fällen Abtastzähler-Werte von '4' oder '5' für korrekte Datenabtastung genutzt werden. Wenn man nun vorhersagen könnte, ob die Flankenverzerrung bei tfr nach früh oder spät, d.h. in Richtung einer Verkürzung oder Verlängerung des low-Bereichs, wirkt, könnte man gezielt durch die Wahl des Abtastpunktes die Übertragung robuster machen. In den gezeigten zwei worst cases (vgl. Fig. 7 und 9) wird die Übertragung an beiden Abtastpunkten '4' und '5' erfüllt, aber je nach Verzerrung mit unterschiedlicher Robustheit. Bei der Kanalverzerrung kann man nur den systematischen Anteil berücksichtigen, welcher aber der größere Anteil ist. Somit kann die Richtung der Flankenverzerrung selbst dann noch gemessen werden, wenn sie einen stochastischen Anteil aufweist, sofern die systematische Verzerrung hoch in der einen oder anderen Richtung liegt. Bei einer eher ausgeglichenen systematischen Verzerrung ist es ohnehin gleichgültig, bei welchem Wert abgetastet wird, wie die obigen worst case Beispiele aus den Fig. 7 und 9 gezeigt haben.

Fig. 11 zeigt nun, wie man an einem Datenbyte 0x00, das vorzugsweise als erstes Datenbyte eines Datenrahmens zusätzlich gesendet wird, bestimmen kann, ob eine solche komplette low-Phase zwischen zwei Byte Start Sequenzen (BSS) durch die Kanalverzerrungen verkürzt oder verlängert worden ist. Auch hier sind die Messungen für den worst case dargestellt. Für die beim RxD-Knoten empfangene Wellenform gilt: t_1=9*8*clk_p_nom=900ns. Gemäß der Protocol Specification 2.0.20, Seite 73, Tabelle 3-1 und Punkt 3.2.7.5 ist tfr=(n +/- 0,35)*gdBit und ist nicht abhängig von der tatsächlichen Taktrate des Senderknotens. In dem Beispiel aus Figur 11 wird davon ausgegangen, dass die tfr-Asymmetrie gdBit +/- 35% ist. Durch die Verzerrung bedingt kommt die FES (Frame End Sequenz)-Flanke um t_2 = 0,35*8*clk_p_nom = 35ns zu früh bzw. zu spät. t-res1 bzw. t_res2 ergibt sich aus der Differenz von t_1 und t_2 zu 865ns, was tfr(min) entspricht, bzw. aus der Summe von t_1 und t_2 zu 935ns, was tfr(max) entspricht.

In Fig. 12 ist die von dem Empfangsknoten H abgetastete Wellenform dargestellt. Für die Verzögerung t_VD1 aufgrund des Voting gilt: 2*clk_pH <= t_VD1 <= 3*clk_pH und für t_VD2: 2*clk_pH <= t_VD2 <= 3*clk_pH. Für einen ersten betrachteten Fall (x=1...4) ergibt sich: tS_BSS1a = (9*8 + (x-1) + t_VD1-t_VD2)*clk_pH tS_BSS1a_min = (72 + 1-1 -1)*12,51875ns = 888,83125ns tS_BSS1a_max = (72 + 4-1 +1)*12,51875ns = 951,425ns Damit bewegt sich tS_BSS1a in einem Bereich zwischen 888,83125ns und 951,425ns.

Für einen zweiten betrachteten Fall (x=5...8) ergibt sich: tS_BSS1b = (9*8 + (x-1) + t_VD1-t_VD2)*clk_pH tS_BSS1b_min = (72 + 5-1 -1)*12,48125ns = 936,09375ns tS_BSS1b_max = (72 + 8-1 +1)*12,48125ns = 998,5ns Damit bewegt sich tS_BSS1b in einem Bereich zwischen 936,09375ns und 998,5ns.

Fig. 12 zeigt, dass einfach der Abtastzähler-Wert abzuspeichern ist, bei dem die BSS low-high Flanke detektiert worden ist, d.h. wenn der Signal-Wert high das erste Mal abgetastet wird. Der Abtastzähler wird bei der high-low-BSS-Flanke verzögert um die Zeit t_VD1 zum Voting gestartet bzw. synchronisiert, d.h. auf '1' gesetzt. Die Messung wird beendet, d.h. der Messzähler bei demjenigen Zählerstand angehalten und der Messwert abgespeichert, bei dem die Daten das erste Mal gleich '1' sind. Je nach Verzerrung liegt dieser Zeitpunkt zwischen t_res1 und t_res2 nach dem Start des Zählers. Tabelle 3 zeigt eine Zuordnung der abgetasteten Zählerwerte zu den entsprechenden Abtastzeitpunkten für das Beispiel aus Fig. 12. Es gibt nur die Werte '1' bis '8' für den jetzt vorgesehene Abtastzähler. Die Messwerte entsprechen dem niedrigsten Stand des Abtastzählers für BSS(1) des zweiten Bytes, das nach dem ersten Header-Byte mit dem Datenwert 0x00 gemessen wurde. In der Tabelle 3 wird jedem dieser Werte die Konstante cStrobeOffset als Abtastzeitpunkt 12 zugeordnet. Der Abtastzeitpunkt wird auf den Wert der Konstante gesetzt. Anstelle des bisher in der Spezifikation fest vorgegebenen Wertes '5' ist dann variabel zwischen '4' und '5' zu wechseln, je nach Messergebnis. Die Zeitbereiche der abgetasteten Waveform von Fig. 11 überlappen sich. Dadurch ist eine beliebige Zuordnung möglich, sofern die systematischen Fehler nicht extrem sind.

**Tabelle 3**: Zuordnung Messwert zu Abtastzeitpunkt 12 für Fig. 12

| Messwert | cStrobeOffset |
|----------|---------------|
| 1 | 4 |

(fortgesetzt)

| Messwert | cStrobeOffset |
|----------|---------------|
| 2 | 4 |
| 3 | 4 |
| 4 | 4 |
| 5 | 5 |
| 6 | 5 |
| 7 | 5 |
| 8 | 5 |

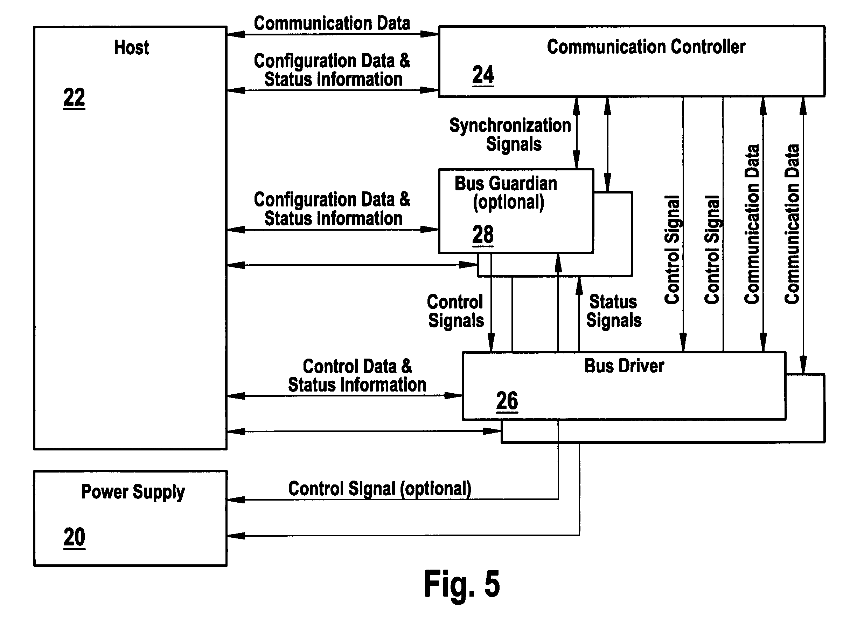

In Fig. 5 ist ein erfindungsgemäßer Teilnehmerknoten eines Datenübertragungssystems beispielhaft dargestellt. Der Teilnehmer weist eine Energieversorgung 20 und einen Host 22 auf, der bspw. als ein Mikroprozessor ausgebildet ist. Die Energieversorgung 20 versorgt sämtliche Komponenten des Teilnehmers mit der erforderlichen Energie. Der Teilnehmer umfasst außerdem einen Kommunikations-Controller 24, der die zu übertragenden Daten (vom Host 22) kodiert und zur Übertragung über die Kommunikationsverbindung an einen Bustreiber 26 des Teilnehmers weiterleitet bzw. die empfangenen Daten (von einem Bustreiber 26) dekodiert und an den Host 22 zur Weiterverarbeitung weiterleitet. Falls der Teilnehmer an mehrere Kommunikationsverbindungen angeschlossen ist, umfasst er mehrere Bustreiber 26, vorzugsweise für jede Kommunikationsverbindung einen eigenen Bustreiber 26. Wahlweise kann in dem Teilnehmer mindestens ein Busguardian 28 vorgesehen sein, welcher den Betrieb des mindestens einen Bustreibers 26 überwacht.

In dem Kommunikations-Controller 24 werden die zu übertragenden Daten unter anderem in das gemäß dem verwendeten Datenübertragungsprotokoll (z.B. FlexRay) festgelegte Format gebracht. Dazu werden die Daten bspw. in geeignete Datenrahmen mit definiertem Aufbau gebracht, die bitweise seriell übertragen werden. In dem Kommunikations-Controller 24 sind außerdem Mittel zum Abtasten eines jeden empfangenen Bits durch eine Mehrzahl von Takten vorgesehen, wobei innerhalb eines Datenrahmens Synchronisationspunkte (z.B. BSS bei FlexRay) zum Bezug einer Abtastung für jedes empfange Bit vorgegeben sein können.

Kommunikationsdaten und Statusinformationen werden zwischen Host 22 und Kommunikations-Controller 24, Host 22 und Bustreiber 26, sowie zwischen Host 22 und Busguardian 28 ausgetauscht. Die zu übertragenden bzw. übertragenen Daten (communication data) werden zwischen dem Host 22 und dem Kommunikations-Controller 24 und weiter zwischen dem Kommunikations-Controller 24 und dem mindestens einen Bustreiber 26 ausgetauscht. Steuersignale werden von dem Kommunikations-Controller 24 an den mindestens einen Bustreiber 26, von dem Busguardian 28 an den mindestens einen Bustreiber 26, und von dem Bustreiber 26 an die Energieversorgung 20 übermittelt. Dadurch kann der Busguardian 28 im Fehlerfall die Energieversorgung für eine oder mehrere der Komponenten des Teilnehmers unterbrechen, um eine weitere fehlerhaft Datenübertragung zu unterbinden.

Zwischen dem Kommunikations-Controller 24 und dem mindestens einen Busguardian 28 werden Synchronisationssignale ausgetauscht. Statussignale werden von dem mindestens einen Bustreiber 26 an den Busguardian 28 übertragen.

In dem Kommunikations-Controller 24 sind schließlich auch Mittel zum variablen Einstellen der Abtastzeitpunkte 12' der Bits eines empfangenen Signals vorgesehen. Die Einstellung der Abtastzeitpunkte 12' kann bspw. in Abhängigkeit von der Qualität des übertragenen Signals, insbesondere in Abhängigkeit von einer asymmetrischen Verzerrung von steigenden und fallenden Signalflanken, eingestellt werden. Dazu kann der Kommunikations-Controller 24 zusätzlich über Mittel zum Messen der Qualität des Signals, insbesondere der asymmetrischen Verzerrung von steigenden und fallenden Signalflanken. Das Messen der Signalqualität geschieht vorzugsweise unter konstanten Randbedingungen, d.h. bspw. bei konstantem Umgebungsdruck, bei konstanter Umgebungstemperatur und konstanter Versorgungsspannung. Zum Messen der asymmetrischen Verzögerung des Signals kann einer bekannter Abstand zwischen einer steigenden und einer fallenden Flanke bzw. zwischen einer fallenden und einer steigenden Flanke des Signals gemessen und mit dem bekannten Wert verglichen werden. Aus der Differenz zwischen tatsächlich gemessenem und nominalem Abstand kann die asymmetrische Verzögerung ermittelt werden. Zum Messen des Abstand zwischen den Flanken kann ein Messzähler, vorzugsweise ein Modulo-8-Zähler, insbesondere der Abtastzähler (sample counter) eingesetzt werden.

Zur Erhöhung der Genauigkeit der Messung werden Ungenauigkeiten, bspw. aufgrund des EMV-Einflusses und des Zeitdiskretisierungsfehlers berücksichtigt. Der Zeitdiskreitisierungsfehler ist in etwa ein Abtasttakt (sog. Sampling-Periode). Darüber hinaus verfügt der Kommunikations-Controller 24 über Mittel zur Ausführung des erfindungsgemäßen Verfahrens.

**Patentansprüche**

1. Verfahren zur Dekodierung eines Signals (10), das über mindestens eine Verbindungsleitung (32) eines Datenübertragungssystems übertragen wird, in einem das Signal (10) empfangenden Teilnehmer (30) des Datenübertragungssystems umfassend mehrere Teilnehmer (30) mit Verbindungsleitungen (32) zwischen den Teilnehmern (30), wobei in dem Signal (10) kodierte Daten in Datenrahmen mit definiertem Aufbau übertragen werden, die Daten bitweise seriell übertragen werden, in dem empfangenden Teilnehmer (30) jedes Bit durch eine Mehrzahl von Takten abgetastet wird, und innerhalb eines Datenrahmens Synchronisationspunkte zum Bezug eines Zeitpunkts (12) einer Abtastung für jedes empfange Bit vorgegeben werden, **dadurch gekennzeichnet, dass** der Abstand eines zwingend in einem in dem Datenübertragungssystem verwendeten Übertragungsprotokoll vorgesehenen Wechsels des Signals (10) von steigender zu fallender oder von fallender zu steigender Flanke gemessen wird.

2. Dekodierungsverfahren nach Anspruch 1, **dadurch gekennzeichnet, dass** der Abstand zwischen einer steigenden Flanke einer Frame Start Sequenz (FSS) und einer fallenden Flanke einer Byte Start Sequenz (BSS) eines Datenrahmens gemessen wird.

3. Dekodierungsverfahren nach Anspruch 1 oder 2, **dadurch gekennzeichnet, dass** mit einer steigenden oder einer fallenden Flanke des Signals (10) ein Messzähler gestartet und mit der fallenden bzw. steigenden Flanke des Signals (10) der Messzähler angehalten wird, wobei der Zählerstand als Maß für den gemessenen Abstand herangezogen wird.

4. Dekodierungsverfahren nach Anspruch 3, **dadurch gekennzeichnet, dass** als Messzähler ein Abtastzähler (14) verwendet wird, der zur Ermittlung des eingestellten Abtastzeitpunktes (12; 12') und zum Auslösen der Abtastung zu dem Abtastzeitpunkt (12; 12') dient.

5. Dekodierungsverfahren nach einem der Ansprüche 1 bis 4, **dadurch gekennzeichnet, dass** aus dem gemessenen Abstand eine Tendenz der asymmetrischen Verzögerung ermittelt wird.

6. Dekodierungsverfahren nach einem der Ansprüche 1 bis 5, **dadurch gekennzeichnet, dass** in Abhängigkeit von dem gemessenen Abstand oder der ermittelten asymmetrischen Verzögerung des übertragenen Signals (10) geeignete Maßnahmen zur Verbesserung der Abtastung der empfangenen Bits getroffen werden.

7. Dekodierungsverfahren nach Anspruch 6, **dadurch gekennzeichnet, dass** zur Verbesserung der Abtastung der empfangenen Bits die Zeitpunkte (12') zur Abtastung der empfangen Bits variabel eingestellt werden.

8. Dekodierungsverfahren nach Anspruch 7, **dadurch gekennzeichnet, dass** der variable Abtastzeitpunkt (12') für jeden empfangenen Datenrahmen variabel eingestellt werden.

9. Dekodierungsverfahren nach Anspruch 7 oder 8, **dadurch gekennzeichnet, dass** in Abhängigkeit von dem gemessenen Abstand oder der ermittelten asymmetrischen Verzögerung des übertragenen Signals (10) ein Korrekturwert (x) für einen festgelegten nominalen Abtastzeitpunkt (t_nom; 12) ermittelt wird, wobei als eingestellter variabler Abtastzeitpunkt (t_var; 12') der um den Korrekturwert (x) korrigierte nominale Abtastzeitpunkt (t_nom; 12) herangezogen wird.

10. Dekodierungsverfahren nach einem der Ansprüche 7 bis 9, **dadurch gekennzeichnet, dass** der variable Abtastzeitpunkt (t_var; 12') bei einer n-fachen Überabtastung eines empfangenen Bits anhand der nachfolgenden Gleichung ermittelt wird:

$$\texttt{t\_var = t\_nom - (y - n) / a,}$$

wobei t_nom der nominale Abtastzeitpunkt (12), y der Zählerstand des Messzählers und a die Anzahl der Bits ist, über welche die Messung der asymmetrischen Verzögerung durchgeführt wird.

11. Dekodierungsverfahren nach einem der Ansprüche 1 bis 5, **dadurch gekennzeichnet, dass** der gemessene Abstand oder die asymmetrische Verzögerung des empfangenen Signals (10) zu Diagnosezwecken herangezogen wird.

**12.** System zur Übertragung eines Signals (10), das System umfassend mehrere Teilnehmer (30), die über Verbindungsleitungen (32) zur Signalübertragung miteinander in Verbindung stehen, und Mittel (26) zum Übertragen von in dem Signal (10) kodierten Daten in Datenrahmen mit definiertem Aufbau und zum bitweise seriellen Übertragen der Daten, wobei mindestens ein das Signal (10) empfangender Teilnehmer (30) Mittel (24) zum Abtasten jedes Bits durch eine Mehrzahl von Takten aufweist, und wobei innerhalb eines Datenrahmens Synchronisationspunkte zum Bezug eines Zeitpunkts einer Abtastung für jedes empfange Bit vorgegeben sind, **dadurch gekennzeichnet, dass** der mindestens eine das Signal (10) empfangende Teilnehmer (30) Mittel zum Messen des Abstands eines zwingend in einem in dem Datenübertragungsprotokoll vorgesehenen Wechsels des Signals (10) von steigender zu fallender oder von fallender zu steigender Flanke aufweist.

**13.** Datenübertragungssystem nach Anspruch 12, **dadurch gekennzeichnet, dass** das System Mittel zur Ausführung eines Verfahrens nach einem der Ansprüche 2 bis 11 aufweist.

**14.** Teilnehmer (30) eines Datenübertragungssystems, das System umfassend den Teilnehmer (30) und mindestens einen weiteren Teilnehmer (30), die über Verbindungsleitungen (32) zur Signalübertragung miteinander in Verbindung stehen, und Mittel (26) zum Übertragen von in dem Signal (10) kodierten Daten in Datenrahmen mit definiertem Aufbau und zum bitweise seriellen Übertragen der Daten, wobei der Teilnehmer (30) Mittel (24) zum Abtasten jedes Bits durch eine Mehrzahl von Takten aufweist, und wobei innerhalb eines Datenrahmens Synchronisationspunkte zum Bezug eines Zeitpunkts einer Abtastung für jedes empfange Bit vorgegeben sind, **dadurch gekennzeichnet, dass** der Teilnehmer (30) Mittel zum Messen des Abstands eines zwingend in einem in dem Datenübertragungsprotokoll vorgesehenen Wechsels des Signals (10) von steigender zu fallender oder von fallender zu steigender Flanke aufweist.

**15.** Teilnehmer (30) nach Anspruch 14, **dadurch gekennzeichnet, dass** der Teilnehmer (30) Mittel zur Ausführung eines Verfahrens nach einem der Ansprüche 2 bis 11 aufweist.

**16.** Teilnehmer (30) nach Anspruch 14, **dadurch gekennzeichnet, dass** ein Kommunikations-Controller (24) des Teilnehmers die Mittel zum Messen des Abstands eines zwingend in dem Datenübertragungsprotokoll vorgesehenen Wechsels des Signals (10) von steigender zu fallender oder von fallender zu steigender Flanke aufweist.

**Claims**

**1.** Method for decoding a signal (10) which is transmitted by at least one link line (32) of a data transmission system in a node (30) receiving the signal (10) of the data transmission system comprising a plurality of nodes (30) with link lines (32) between the nodes (30), wherein data coded in the signal (10) are transmitted in dataframes having a defined structure, the data are transmitted serially bit by bit, each bit is sampled by a plurality of clock cycles in the receiving node (30) and within a dataframe, synchronization points are predetermined as reference of a time (12) of a sampling for each received bit, **characterized in that** the distance of a change, provided mandatorily in a transmission protocol used in the data transmission system, of the signal (10) from rising edge to falling edge or from falling edge to rising edge is measured.

**2.** Decoding method according to Claim 1, **characterized in that** the distance between a rising edge of a Frame Start Sequence (FSS) and a falling edge of a Byte Start Sequence (BSS) of a dataframe is measured.

**3.** Decoding method according to Claim 1 or 2, **characterized in that** a measuring counter is started with a rising or a falling edge of the signal (10) and the measuring counter is stopped with the falling or rising edge, respectively, of the signal (10), the count being used as a measure of the measured distance.

**4.** Decoding method according to Claim 3, **characterized in that** a sample counter (14) is used as a measuring counter which is used for determining the sampling time (12; 12') set and for triggering the sampling at the sampling time (12; 12').

**5.** Decoding method according to one of Claims 1 to 4, **characterized in that** a trend of the asymmetric delay is determined from the distance measured.

**6.** Decoding method according to one of Claims 1 to 5, **characterized in that** suitable measures for improving the sampling of the received bits are taken in dependence on the measured distance or on the determined asymmetric delay of the transmitted signal (10).

7. Decoding method according to Claim 6, **characterized in that** the times (12') for sampling the received bits are adjusted variably to improve the sampling of the received bits.

8. Decoding method according to Claim 7, **characterized in that** the variable sampling time (12') is adjusted to be variable for each received dataframe.

9. Decoding method according to Claim 7 or 8, **characterized in that** a correction value (x) for a specified nominal sampling time (t_nom; 12) is determined in dependence on the measured distance or on the determined asymmetric delay of the transmitted signal (10), the nominal sampling time (t_nom; 12) corrected by the correction value (x) being used as variable sampling time (t_var; 12') set.

10. Decoding method according to one of Claims 7 to 9, **characterized in that** the variable sampling time (t_var; 12') is determined with an n-fold oversampling of a received bit by means of the following equation:

$$t\_var = t\_nom - (y - n) \ / \ a,$$

where t_nom is the nominal sampling time (12), y is the count of the measuring counter and a is the number of bits over which the asymmetric delay is measured.

11. Decoding method according to one of Claims 1 to 5, **characterized in that** the measured distance or the asymmetric delay of the received signal (10) is used for diagnostic purposes.

12. System for transmitting a signal (10), the system comprising a plurality of nodes (30) which are connected to one another via link lines (32) for the purpose of signal transmission, and means (26) for transmitting data coded in the signal (10) into dataframes having a defined structure and for transmitting the data serially bit by bit, wherein at least one node (30) receiving the signal (10) has means (24) for sampling each bit by means of a plurality of clock cycles, and wherein synchronization points are predetermined within a dataframe as reference of a time of a sampling for each received bit, **characterized in that** the at least one node (30) receiving the signal (10) has means for measuring the distance of a change, provided mandatorily in the data transmission protocol, of the signal (10) from rising edge to falling edge or from falling edge to rising edge.

13. Data transmission system according to Claim 12, **characterized in that** the system has means for executing a method according to one of Claims 2 to 11.

14. Node (30) of a data transmission system, the system comprising the node (30) and at least one further node (30) which are connected to one another via link lines (32) for the purpose of signal transmission, and means (26) for transmitting data coded in the signal (10) in dataframes having a defined structure and for transmitting the data serially bit by bit, wherein the node (30) has means (24) for sampling each bit by means of a plurality of clock cycles and wherein synchronization points are predetermined within a dataframe as reference of a time of sampling for each received bit, **characterized in that** the node (30) has means for measuring the distance of a change, provided mandatorily in the data transmission protocol, of the signal (10) from rising edge to falling edge or from falling edge to rising edge.

15. Node (30) according to Claim 14, **characterized in that** the node (30) has means for executing a method according to one of Claims 2 to 11.

16. Node (30) according to Claim 14, **characterized in that** a communication controller (24) of the node has the means for measuring the distance of a change, provided mandatorily in the data transmission protocol, of the signal (10) from rising edge to falling edge or from falling edge to rising edge.

**Revendications**

1. Procédé pour décoder un signal (10) qui est transmis par le biais d'au moins une ligne de liaison (32) d'un système de transmission de données, dans un abonné (30) recevant le signal (10) du système de transmission de données englobant plusieurs abonnés (30) avec des lignes de liaison (32) entre les abonnés (30), des données codées étant transmises dans le signal (10) dans des trames de données ayant une structure définie, les données étant transmises en série bit par bit, chaque bit étant échantillonné dans l'abonné destinataire (30) par une pluralité de cycles, et des points de synchronisation destinés à référencer un instant (12) d'un échantillonnage étant prédéfinis à l'intérieur d'une trame de données pour chaque bit reçu, **caractérisé en ce que** l'écart entre un changement du signal (10) de front montant en front descendant ou de front descendant en front montant, prévu obligatoirement dans un protocole de transmission utilisé dans le système de transmission de données, est mesuré.

2. Procédé de décodage selon la revendication 1, **caractérisé en ce que** l'écart entre un front montant d'une séquence de début de trame (FFS) et un front descendant d'une séquence de début d'octet (BSS) d'une trame de données est mesuré.

3. Procédé de décodage selon la revendication 1 ou 2, **caractérisé en ce que** qu'un compteur de mesure est démarré avec un front montant ou descendant du signal (10) et le compteur de mesure est arrêté avec le front descendant ou montant du signal (10), la valeur du compteur étant utilisée comme mesure pour l'écart mesuré.

4. Procédé de décodage selon la revendication 3, **caractérisé en ce que** le compteur utilisé est un compteur échantillonneur (14) qui sert à déterminer l'instant d'échantillonnage (12 ; 12') réglé et à déclencher l'échantillonnage à l'instant d'échantillonnage (12 ; 12').

5. Procédé de décodage selon l'une des revendications 1 à 4, **caractérisé en ce qu'**une tendance du retard asymétrique est déterminée à partir de l'écart mesuré.

6. Procédé de décodage selon l'une des revendications 1 à 5, **caractérisé en ce que** des mesures appropriées d'amélioration de l'échantillonnage des bits reçus sont prises en fonction de l'écart mesuré ou du retard asymétrique déterminé du signal transmis (10).

7. Procédé de décodage selon la revendication 6, **caractérisé en ce que** pour améliorer l'échantillonnage des bits reçus, les instants (12') d'échantillonnage des bits reçus sont réglés de manière variable.

8. Procédé de décodage selon la revendication 7, **caractérisé en ce que** l'instant d'échantillonnage variable (12') est réglé de manière variable pour chaque trame de données reçue.

9. Procédé de décodage selon la revendication 7 ou 8, **caractérisé en ce qu'**en fonction de l'écart mesuré ou du retard asymétrique déterminé du signal transmis (10), une valeur de correction (x) pour un instant d'échantillonnage nominal (t_nom ; 12) fixe est déterminée, l'instant d'échantillonnage variable (t_var ; 12') réglé utilisé étant l'instant d'échantillonnage nominal (t_nom ; 12) corrigé de la valeur de correction (x).

10. Procédé de décodage selon l'une des revendications 7 à 9, **caractérisé en ce que** l'instant d'échantillonnage variable (t_var ; 12'), dans le cas d'un suréchantillonnage n fois d'un bit reçu, est déterminé au moyen de l'équation suivante :

$$t\_var = t\_nom - (y - n) \ / \ a,$$

où t_nom désigne l'instant d'échantillonnage nominal (12), y la valeur du compteur de mesure et a le nombre de bits sur lesquels est effectuée la mesure du retard asymétrique.

11. Procédé de décodage selon l'une des revendications 1 à 5, **caractérisé en ce que** l'écart mesuré ou le retard asymétrique du signal reçu (10) est utilisé à des fins de diagnostic.

12. Système pour la transmission d'un signal (10), le système comprenant plusieurs abonnés (30) qui sont en liaison entre eux par le biais de lignes de liaison (32) pour la transmission de signaux, et des moyens (26) pour transmettre des données codées dans le signal (10) dans des trames de données ayant une structure définie et pour transmettre les données en série bit par bit, au moins un abonné (30) recevant le signal (10) présentant des moyens (24) pour échantillonner chaque bit par une pluralité de cycles, et des points de synchronisation destinés à référencer un instant d'un échantillonnage étant prédéfinis à l'intérieur d'une trame de données pour chaque bit reçu, **caractérisé en ce que** l'au moins un abonné (30) recevant le signal (10) présente des moyens pour mesurer l'écart entre un changement du signal (10) de front montant en front descendant ou de front descendant en front montant, prévu obligatoirement dans le protocole de transmission de données.

**13.** Système de transmission de données selon la revendication 12, **caractérisé en ce que** le système présente des moyens pour exécuter un procédé selon l'une des revendications 2 à 11.

**14.** Abonné (30) d'un système de transmission de données, le système comprenant l'abonné (30) et au moins un abonné (30) supplémentaire, lesquels sont en liaison entre eux par le biais de lignes de liaison (32) pour la transmission de signaux, et des moyens (26) pour transmettre des données codées dans le signal (10) dans des trames de données ayant une structure définie et pour transmettre les données en série bit par bit, l'abonné (30) présentant des moyens (24) pour échantillonner chaque bit par une pluralité de cycles, et des points de synchronisation destinés à référencer un instant d'un échantillonnage étant prédéfinis à l'intérieur d'une trame de données pour chaque bit reçu, **caractérisé en ce que** l'abonné (30) présente des moyens pour mesurer l'écart entre un changement du signal (10) de front montant en front descendant ou de front descendant en front montant, prévu obligatoirement dans le protocole de transmission de données.

**15.** Abonné (30) selon la revendication 14, **caractérisé en ce que** l'abonné (30) présente des moyens pour exécuter un procédé selon l'une des revendications 2 à 11.

**16.** Abonné (30) selon la revendication 14, **caractérisé en ce qu'**un contrôleur de communication (24) de l'abonné présente les moyens pour mesurer l'écart entre un changement du signal (10) de front montant en front descendant ou de front descendant en front montant, prévu obligatoirement dans le protocole de transmission de données.

**MSB**

| | i+2 | i+1 | i | i-1 |
|---|---|---|---|---|
| | 0 | 1 | 0 | 1 |

0    1    0    1

## Fig. 1

**MSB**

| | i+2 | i+1 | i | i-1 |
|---|---|---|---|---|
| | 0 | 1 | 0 | 1 |

0    1    0    1

## Fig. 2

TSS      FSS      BSS(1)      BSS(0)

14

| 7 | 0 | 2 | 3 | 0* | 1 | 2 | 3 | 4 | 5 | 6 | 7 | 0 | 1 | 2 | 3 | 4 | 5 | 6 | 7 | 0 | 1 | 2 |

Y

## Fig. 3

**TSS**       **FSS**       **BSS(1)**      **BSS(0)**

14

| 8 | 9 | A | B | 0* | 1 | 2 | 3 | 4 | 5 | 6 | 7 | 8 | 9 | A | B | C | D | E | F | 10 | 11 | 12 | 13 | 14 |

Y

# Fig. 4

**Host**

**22**

Communication Data

Configuration Data & Status Information

**Communication Controller**

**24**

Synchronization Signals

**Bus Guardian (optional)**

**28**

Configuration Data & Status Information

Control Signals

Status Signals

Control Signal

Control Signal

Communication Data

Communication Data

Control Data & Status Information

**Bus Driver**

**26**

**Power Supply**

**20**

Control Signal (optional)

Fig. 5

EP 1 878 166 B1

NODE
A ⌐30

32

NODE
B

Star
A1

NODE
C

NODE
D

32

NODE
E

Star
A2

NODE
F

32

NODE
H ⌐30

NODE
G

## Fig. 6

BSS                    data 0x00                    FES

MSB                                    LSB

$t_2$

$t_{res}$

$t_1$

## Fig. 7

$t_{res}$ = 965 ns

BSS    data 0x00    FES

MSB    LSB

$t_{VD1}$    $clk_{ph}$    $t_{VD2}$

$t_{S\_FES1}$

sample
counter
reset to 1

sample
counter
value is 5

## Fig. 8

BSS    data 0x00    FES

MSB    LSB

$t_2$

$t_1$

$t_{res}$

## Fig. 9

$t_{res}$ = 1035 ns

BSS

data 0x00

FES

MSB    LSB

$t_{VD1}$    $clk_{ph}$    $t_{VD2}$

$t_{S\_FES2}$

sample
counter
reset to 1

sample
counter
value is 5

## Fig. 10

BSS

data 0x00

BSS

MSB    LSB

$t_2$

$t_{res1}$

$t_2$

$t_1$

$t_{res2}$

## Fig. 11

$$t_{res2} = 935 \text{ ns}$$

$$t_{res1} = 865 \text{ ns}$$

BSS

data 0x00

FSS

MSB

LSB

$t_{VD1}$

$clk_{ph}$

$t_{VD2}$

$t_{S\_BSS1(waveform)}$

start

stop

## Fig. 12

6                 6   8a    8b    8a    8b    8a

2                 4

## Fig. 13

BSS 100% 70% 30% 0% 10 FES 10 d10Bit_Tx

**Fig. 14**

TxD 10 1 0 0 0 1 1 0 X1 X2 16 18 RxD 10 1 0 0 0 1 1 0 X1 X2 20

**Fig. 15**

10    MSB           i+1   i   i-1

**Fig. 16**

10    MSB           i+1   i   i-1

**Fig. 17**

10    MSB           i+1   i   i-1

**Fig. 18**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10120360 A1